# EUROPEAN PATENT APPLICATION

(11) **EP 1 081 623 A2**
(43) Date of publication of application: **07.03.2001**
(21) Application number: 00307554.6
(22) Date of filing: 01.09.2000
(51) Int. Cl.: G06F 17/60

(54) **Method for insurance product provision**

(30) Priority: 01.09.1999 GB 9920577
(71) Applicant: The Scottish Provident Institution, Edinburgh EH2 2YA (GB)
(72) Inventor: Edwards, Roger, East Lothian EH21 6UN, Scotland (GB); Hay, John, Edinburgh EH4 3HX, Scotland (GB); Fraser, David, Edinburgh EH3 6SE, Scotland (GB); Kennedy, Andrew, Edinburgh EH7 4JR, Scotland (GB)
(74) Representative: Chugg, David John

(57) **Abstract**

The invention relates to a method of insurance product provision and of updating insurance product provision. In the method, a client's financial position is assessed to identify the client's insurance needs, following this assessment identified benefits are presented to the client and the client chooses which benefits to adopt within the policy plan. In the method, at least some of the chosen benefits have different manners of paying out which are selectable by the client.

## Description

The invention relates to a method for insurance product provision, the updating of such provision and a method of alerting clients to the need for updating their insurance product.

There are many different types of assurance products available on the market comprising individual assurance products for providing, for instance, life assurance, critical illness cover and mortgage protection. Generally, in such existing products where customers wish to take out a number of different types of assurance, a customer would need to take out separate individual policies, make all of the choices regarding types of benefits, how payments are to be made, make all the necessary applications, have all of the policies implemented and need to look after all of the paperwork separately. In some cases, there may be an overlap in policy provisions which is not desired, but which is a feature of putting together such a patchwork of benefits from different policies which may all be with the same provider, or may be with different providers.

The disadvantages with proceeding in the above manner are that the customer must go through a long and tedious process of form filling for a number of different policies, perhaps consulting independent financial advisers, trying to identify overlaps in provisions and attempting to tailor often inflexible products to own individual needs, attending to the setting up of regular payment schemes for each of the different policies etc., etc.

In 1996, the applicant, Scottish Provident, came up with the idea of the "menu of benefits" product. This was effectively a menu of term assurance covers, which offered more than the traditional death benefit - i.e. critical illness, total permanent disability, permanent health insurance etc. The covers could be set up to pay benefits in different ways e.g. income or lump sum, and benefits could be selected in more or less any combination to meet the needs of the customers.

The product was launched in March 1996 under the SELF ASSURANCE banner. SELF ASSURANCE was the name of the company's critical illness product, which had high name awareness with IFAs (Independent Financial Advisors).

IFAs took to the menu of benefits approach straightaway because it fitted in extremely well with the advice they give. Each of their clients had different needs and IFAs like the SELF ASSURANCE menu approach to meeting those needs individually.

Business increased to £10.4 million - 800 cases per week and an IFA market share of 10%.

Following a strategic review within Scottish Provident the company decided to focus on protection.

There then followed another major research project to find out what customers and IFAs would want from protection into the next Millennium. This included workshops with customers and expert workshops with members of the Government, charitable and academic organisations, and industry experts.

The results of the research were that the SELF ASSURANCE product was along the right lines but needed to be much more flexible than it currently was (and it was still the most flexible product on the market). A plan was put together to design the 2001 version of SELF ASSURANCE and for this a new computer system which would give the product the required level of flexibility was sought out.

1997 - Whilst the 2001 plans started to come together the existing SELF ASSURANCE was continually developed to offer more benefits and flexibility within the confines of the existing computer systems.

The 1997 Booster development resulted in 1500 cases per week, new business of £18.4 million and an IFA market share of 15%.

Scottish Provident successfully applied for a Trademark for the SELF ASSURANCE brand.

The product development and the marketing of SELF ASSURANCE won the "Large Service Industry" award at the Scottish Marketing Awards.

1998 - Two more Booster developments result in 2000 cases per week, business of £28.4 million and an IFA market share of 28%.

Scottish Provident was awarded a Gold Protection Provider award by Financial Adviser magazine, came first in the product innovation section by a considerable margin and came top overall.

Scottish Provident's decision to focus on protection has been instrumental in the development of the SELF ASSURANCE range. Unlike other companies which are trying to write business and compete in all financial markets: mortgages, protection, pensions and investments, Scottish Provident have focused just on protection.

This has meant that all the expertise of the applicant has been channelled in this direction. Actuarial, marketing, systems development, are all focused on delivering a customer focused protection product. This new company focus has already been rewarded by the British Government conferring the prestigious Millenium Product status on the current SELF ASSURANCE product - the first insurance product ever to be given such an award.

The system and methods of the present invention are intended to give the flexibility needed to produce a true menu of benefits product that is the new SELF ASSURANCE.

Other companies have not had the focus, and have thus maintained their protection products on existing inflexible systems meaning they have been unable to develop anything anywhere near approaching the nature of SELF ASSURANCE.

It is an aim of embodiments of the present invention to provide the following:
a system and method which is primarily concerned with the matching of customer needs to appropriate flexible products ("benefits") to fulfil those needs, presenting the customer with flexible options regarding how the particular products should pay out in the event of a triggering event occurring, consolidating the customer selected products in such a way that the customer is presented with a simple payment plan and, following adoption of a particular menu of benefits, providing flexibility such that customers may simply add, delete or change benefits as desired from time to time.

According to a first aspect of the invention, there is provided a method of insurance product provision for customers, the method comprising the steps of:
(i) from an assessment of a clients financial position as established in a fact finding exercise, identifying a clients insurance needs in terms of recommended required benefits of a single flexible policy plan;
(ii) presenting the identified benefits to the client and enabling the client to choose which benefits to adopt within the policy plan;
(iii) for at least some of the chosen benefits allowing the client to choose how each benefit should pay out;
(iv) calculating the policy plan cost on the basis of the benefits selected; and
(v) implementing the policy.

Preferably, in step (iii), for particular benefits chosen, the client is able to choose how that benefit should pay out. How the benefit pays out may be subject to limitations imposed by product rules relating to the particular benefits. For instance, a benefit may pay out as: (a) a level cash sum; (b) an increasing cash sum; (c) a level income; (d) an increasing income; (e) a decreasing cash sum.

In step (ii), the client may choose more than one benefit of a same type.

Benefit types may comprise the following:
(I) death benefit;
(II) critical illness benefit;
(III) death or critical illness benefit;
(IV) disability income benefit;
(V) unemployment benefit;
(VI) health cash benefit;
(VII) premium payment benefit.

Further benefit types may be available.

Where the client selects more than one benefit of the same type, for instance two death benefits, the client may select those benefits to pay out in different ways amongst ways which may be specified in particular product rules. For instance, a first death benefit may be selected to pay out a cash sum and a second death benefit to pay out an income.

Chosen benefits may be chosen to have dissimilar duration. For instance, a first benefit duration may be twenty five years to cover a mortgage period, and a second benefit duration may be seven years to cover school fees.

Chosen benefits may be chosen to have dissimilar pay out amounts.

Chosen benefits may be taken out with either reviewable or guaranteed rates.

Chosen benefits may be level or index linked.

According to a second aspect of the invention, there is provided a method of updating insurance provision for customers, the method comprising the steps of:
(i) assessing a change in client financial position with respect to the client's financial position assessed during an initial policy plan take up;
(ii) from the change in client position identified in step (i) identifying a client's new insurance needs in terms of recommended updated current benefits or new benefits of a single flexible policy plan;
(iii) presenting identified benefits to the client and enabling the client to choose which benefits to adopt within an updated policy plan;
(iv) for each new benefit or updated benefit allowing the client to choose how each benefit should pay out;
(v) calculating the policy plan cost on the basis of prior selected and continued unchanged benefits, updated benefits and new benefits selected; and
(vi) implementing the policy.

Preferably, how the benefit pays out is subject to limitations imposed by product rules relating to the particular benefits.

Preferably, the product rules dictate that a benefit may pay out as: (a) a level cash sum; (b) an increasing cash sum; (c) a level income; (d) an increasing income; (e) a decreasing cash sum.

Preferably, in step (iii), the client is able to choose more than one benefit of a same type.

Available benefit types presented in step (iii) may comprise the following:
(I) death benefit;
(II) critical illness benefit;
(III) death or critical illness benefit;
(IV) disability income benefit;
(V) unemployment benefit;
(VI) health cash benefit;
(VII) premium payment benefit.
Benefits having dissimilar durations are preferably selectable.

The invention of the second aspect preferably includes any one or more of the preferred features according to the first aspect in any combination.

According to a third aspect of the invention, there is provided a method of alerting a client to a situation in which it is desirable to update an existing policy plan, the method comprising the steps of:
(i) analyzing client data from a client information data base;
(ii) identifying clients to target;
(iii) identifying the type and subject of client contact most appropriate;
(iv) producing appropriate mailing packs/letters/communications material;
(v) contacting clients;
(vi) making a follow-up communication to contacted clients; and
(vii) for interested clients, discussing changes required and implementing changes to existing policy according to the method of the second aspect of the invention.

For a better understanding of the invention, and to show how embodiments of the same may be carried into effect, reference will now be made, by way of example, to the accompanying diagrammatic drawings in which:
Figure 1 shows a navigation tree illustrating the principle steps involved in processing life assurance application;
Figure 2 is a coverage critique for death benefit;
Figure 3 shows a coverage critique for critical illness cover;
Figure 4 shows a coverage critique for death or earlier critical illness benefit;
Figure 5 shows a coverage critique for disability income;
Figure 6 shows a coverage critique for waiver of premium;
Figure 7 shows a coverage critique for unemployment benefit;
Figure 8 shows a coverage critique for unemployment waiver of premium;
Figure 9 shows a coverage critique for long term care;
Figure 10 shows a coverage critique for accidental death benefit;
Figure 11 shows a coverage critique for hospital cash benefit;
Figure 12 shows a coverage critique for operation cash benefit;
Figure 13 shows a coverage critique for personal accident benefit;
Figure 14 shows a coverage critique for medical cash benefit;
Figure 15 is a flow chart demonstrating pro-active upselling; and
Figure 16 is a flow chart illustrating an automated process for issue of mailshots.

The methods and systems of embodiments of the present invention are arranged so as to provide a maximum of flexibility and choice to individuals when selecting a number of benefits. Examples of benefits are:
(i) Death Benefits - meaning a lump sum or income paid out on death or terminal illness of a life assured;
(ii) Critical illness benefit - a lump sum or income paid out on diagnosis of a life assured suffering from one of a number of defined critical illnesses and if still alive 14 days later, or if the life assured becomes permanently and totally disabled;
(iii) death or critical illness benefits - a lump sum or income paid out on death or diagnosis of a life assured suffering from one of a number of defined critical illnesses, or if the life assured becomes permanently and totally disabled;
(iv) disability income benefits - a permanent health insurance benefit which could be packaged as a full income replacement cover or as a lower level of benefit to cover mortgage interest benefit or living expenses;
(v) waiver of premium - a permanent health insurance coverage designed to waive all the premiums in a particular plan if one of the lives assured cannot work due to sickness or disability;
(vi) unemployment benefit - a benefit designed to pay an income if the life assured becomes unemployed;
(vii) unemployment waiver of premium - an unemployment benefit coverage designed to waive all the premiums in a particular plan if one of the lives assured becomes unemployed;
(viii) long term care - an income benefit designed to provide finance for the long term care requirements of the life assured either in his own home or in nursing or residential homes;
(ix) accidental death benefit - a lump sum or income paid out on accidental death [accidental death being defined as the death of the life assured resulting from injury (death may occur within one year of the injury for a valid claim to be paid as long as the injury was directly for responsible for death) inflicted by accidental, violent, external and physical means, independent of mental illness of pre-existing physical infirmity];
(x) Hospital cash benefit - this benefit will pay a cash amount for each day spent in hospital by the life assured. In addition it will pay an extra cash sum if the life assured undergoes an operation;
(xi) operation cash benefit - this benefit will pay a cash lump sum if the life assured undergoes specified surgery;
(xii) personal accident benefit - a lump sum paid out on accidental bodily injury or disability;
(xiii) no cost coverages - such as: accidental death benefit during processing of an application; free life cover on mortgage cases; children's critical illness cover;
(xiv) medical expenses benefit - a benefit that can be structured to provide full or budget private medical insurance or "health cash" type benefits;

Under the scheme proposed, the customer is able to select an unlimited number of benefits, from most of those exemplified above most of them capable of being selected to pay out in a number of different ways, for instance by level and increasing cash sums, level and increasing income or decreasing cash sums for mortgage cases.

A customer can choose more than one of most benefits - for instance two death benefits, one of which pays a cash sum and another of which pays an income.

This type of flexibility is unique in that such a huge range or "menu of benefits" can be provided in what is effectively a single policy. Each benefit can last for a different period dependent upon the customers needs. For example, one benefit could last for 25 years to cover a mortgage and another could last for 7 years to cover school fees. Benefits can be for differing amounts, be taken out with reviewable or guaranteed rates, be level or inflation linked.

Another of the key features of the proposed method and system is that once a particular policy plan is in force for a customer, any change may be made as the customer requires it such as: adding a benefit; increasing a benefit; adding a new life; changing level benefits to increasing benefits; removing a benefit; reducing a benefit; removing a life; or changing an increasing benefit to a level benefit.

Any benefits developed by the company providing the plan may be added to the plan at any stage if required by the customer.

The above features of the method and system are achievable in a unique way and an example of the customer experience in buying required protection and applying for such protection using the novel method and system will hereinafter be described.

In common with previous procedures, a customer requiring various benefits/protection schemes will visit an independent financial adviser. The adviser will get the customer to fill in a fact finding package to identify the client needs. For example, the fact find might reveal that the client is taking out a 25 year repayment mortgage, has a family and two children who need to be taken care of financially, the client having a salary of £30,000.

From the fact find and the client's needs revealed by that fact find, the independent financial adviser will in this case identify the need for several protection benefits such as: 25 year joint life decreasing death and critical illness cover to protect the mortgage; 25 year level disability income insurance benefit to protect the mortgage interest payments should the client become sick and unable to work; inflation linked lump sum death and critical illness benefits to provide family protection until retirement; and inflation linked disability income insurance to cover the client's income.

Under the old system the financial adviser would get quotes for the four separate policies required and select the best combination taking price and benefits into consideration. In contrast, under the new system the adviser would get a quote under the single plan known as SELF ASSURANCE which combines the four required benefits within the same plan.

Whereas under prior systems, the client would next agree to take on all four products (or more likely may find the combined cost too much and decide to do without one or more one of the important coverages), the client under the new system would agree to the SELF ASSURANCE plan, with a single premium which is likely to be less expensive than the combined sum of four conventional premiums.

In the next step the client simply fills out one application form and authorizes one single direct debit and will be underwritten once and for all for all benefits, with one policy resulting. The end result being that the client pays only one premium and one set of charges and only needs to fill out one set of paperwork. Under the previous system, the client would fill out all four application forms, authorize four direct debits, possibly need to have the four policies underwitten by four different companies, maintain four sets of policy documentation and pay four premiums with four sets of charges and policy fees.

As an individual's financial needs are never completely static, the customer way well have the situation reviewed after a few years. For instance, the customer may have had two more children and need higher family protection or may be moving house and taking on a bigger mortgage. Under the method and systems of the present invention, a review by the financial adviser would simply arrange for the SELF ASSURANCE plan to be altered, with the mortgage benefit being reset at the required level and the term extended to the new mortgage term and the childbirth option exercised so as to increase benefits as much as possible without new underwriting.

Previous review systems would have required the original mortgage protection plan to be cancelled and a new one applied for with new forms to fill in etc., and the family protection policy may quite probably not allow for an increasing cover suitably high enough meaning the client would have to cancel the old plan and take out a new one for the higher one with another company. Again, new forms to fill, new underwriting and a new policy being required.

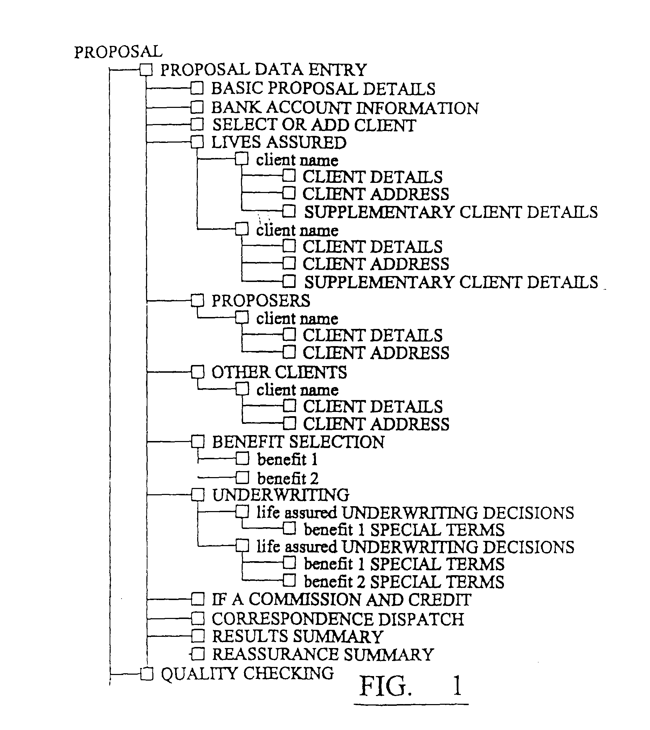

Referring now to Figure 1, there is shown a navigation tree. This tree shows the progress of a proposal and allows the selection of the dialogues highlighted. A navigation tree is created upon an operative processing the proposals and entering data of Product Type into a computerised processing system along with basic proposal details.

Much of the details shown in the navigation tree are relatively standard and straight forward.

From the proposal, data entry begins with filling in basic proposal details, a bank account information, client entry - the client could be an existing client in which case it is a SELECT operation, or could be a new client, in which case it is an ADD CLIENT operation.

There are then entered details of the lives assured together with client name, details, address etc. for however many clients are required. Next, proposers details are entered before the benefit selection process in which the main novel and inventive features of this invention reside. At this point in the tree, any number of different benefits, may be selected.

Next, follows the process of underwriting of the various lives assured taking into account any special terms which might apply.

Following underwriting, commission and credit steps for independent financial adviser/assurance company representatives is calculated, correspondence despatched and summaries produced.

At the beginning of the navigation progress along the navigation tree, the basic skeleton of the navigation tree would show only Basic Proposal Details, Bank Account Information, and Select or Add Client. The user can launch any dialogue on the tree by double clicking on it. The tree will be disabled while another dialogue is displayed, therefore, the user must close one dialogue before being able to select another. Dialogues entered via the tree have OK and CANCEL buttons. Selecting OK removes the dialogue saving all changes. Selecting CANCEL closes the tree without saving.

Independent of the Navigation Tree, there is a quality checking step which comprises a label beneath which are shown individual validation errors after the quality checking has been performed. Each error is a separate branch. For example: "Mr Alan Smith: surname", indicates a client related error in the surname field or "Basic Proposal Details: amount of cheque", indicates a non-client related branch showing the dialogue name and the field that failed.

Details of examples of different benefits will now be given with reference to a specific coverage critique for each.

### Death Benefit

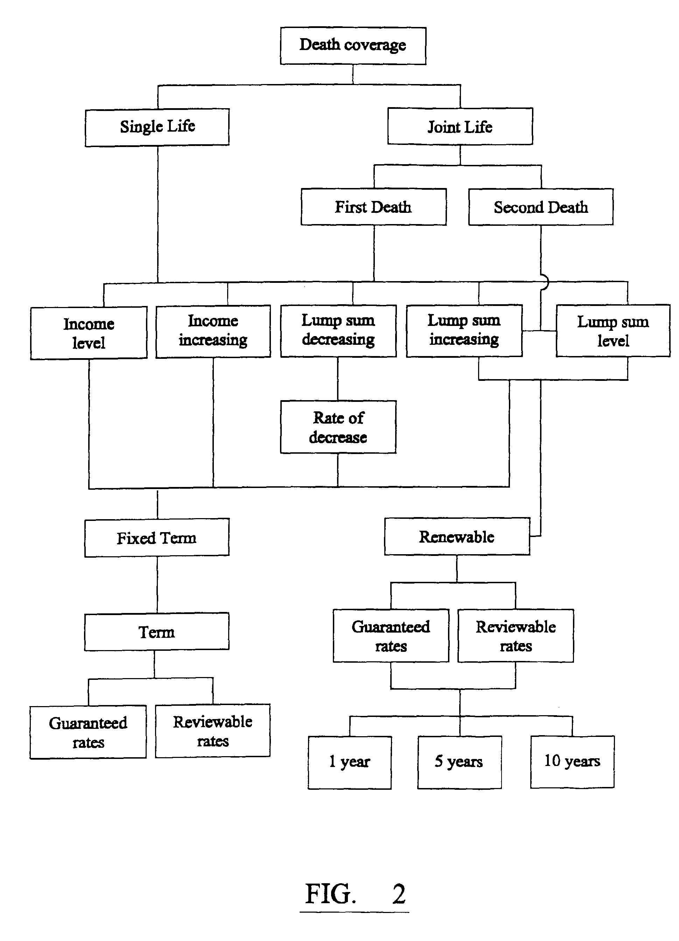

Referring to Figure 2, there is shown a coverage critique for death benefit.

From the coverage critique, it will be apparent that death benefit may be selected on a single life or joint life basis and to pay out on a first death or second death basis. The pay out of the policy may be on a level income basis, an increasing income basis, a lump sum decreasing basis with the rate of decrease being selectable), as an increasing lump sum or as a level lump sum.

At the base of the coverage critique, it can be seen that according to the selected pay out method, different duration possibilities apply, i.e. where level income, increasing income, lump sum decreasing or lump sum increasing has been selected, a fixed term may apply with rates being either guaranteed or reviewable over that term and that where either a lump sum increasing or level lump sum has been selected, the term may be a renewable term which could have guaranteed rates or reviewable rates with renewable periods being one year, five years or ten years.

As has been mentioned earlier, a client may select a number of death benefits and may select those benefits to pay out in different ways. A first death benefit paying out a lump sum and a second death benefit paying out an income.

The basis of coverage for death benefits is generally in line with the types of cover available under individual death benefit policies available on the market. However, such traditional schemes do not give the flexibility of combination of benefits, choice of pay out methods etc. that the present invention is able to offer.

With death benefits, the triggering event which causes that particular benefit to pay out is of course, the death of a life assured.

### Critical Illness Cover

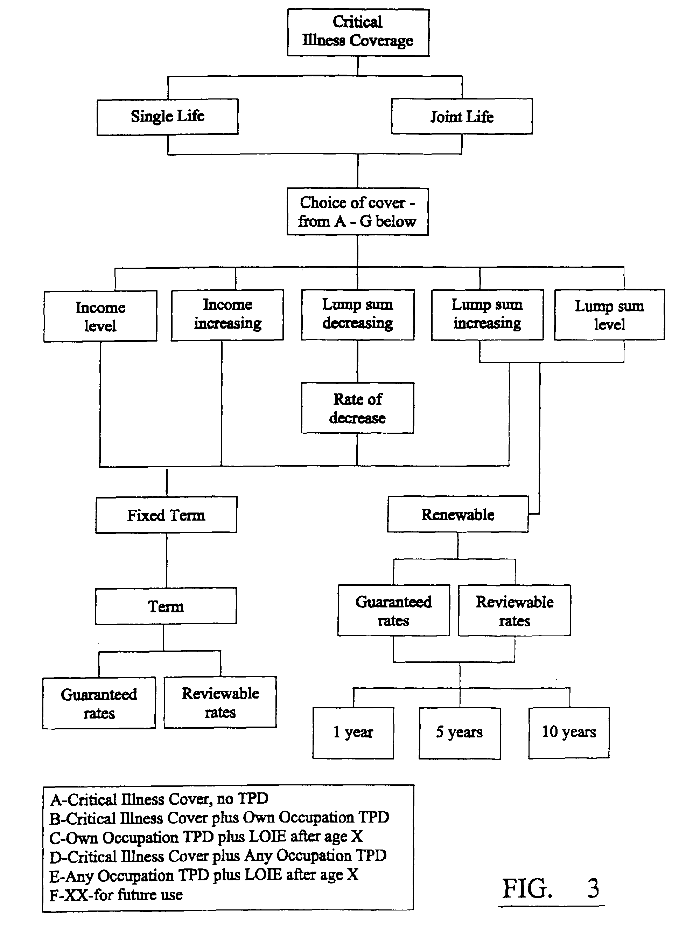

Referring now to Figure 3, there is shown the coverage critique giving basic details of critical illness coverage.

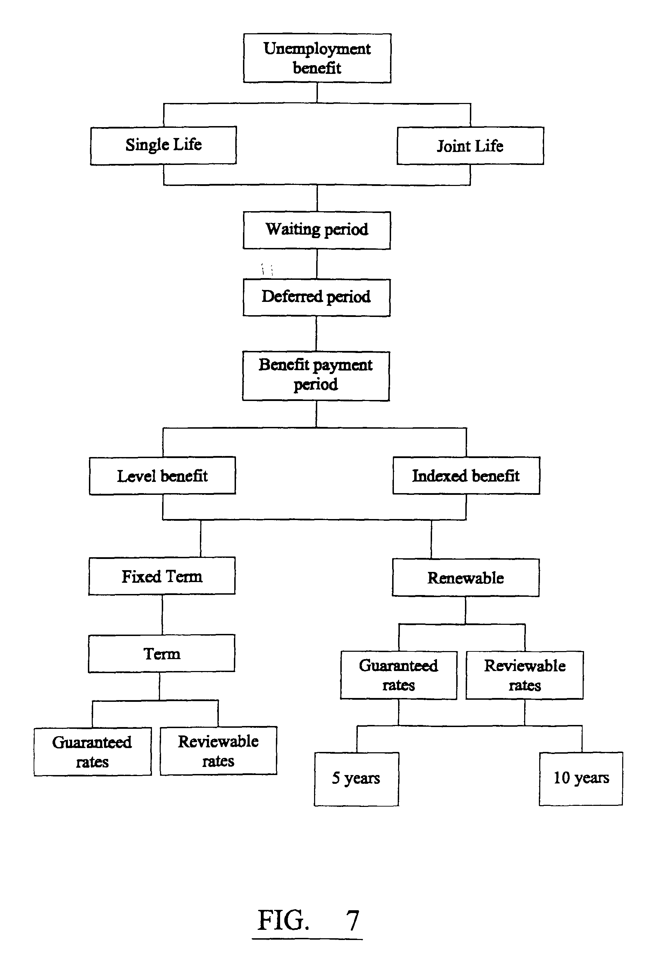

Many of the details of the coverage critique of Figure 7 are similar to those shown in Figure 2 for death benefit. Therefore, only the dissimilarities in the critiques will be mentioned here.

Critical illness coverage may be on a single life or joint life first event basis. Effectively what this means is that there may be one name assured with coverage paying out upon a triggering event happening to that one life, or there may be a number of lives assured, for instance, a married couple, with payment triggering upon critical illness first striking one of the lives assured.

Different choices of cover are available, those choices currently being: A - critical illness cover, no total permanent disability; B - critical illness cover plus own occupation total disability; C - own occupation total permanent disability plus loss of independent existence after age X; D - critical illness cover plus any occupation total permanent disability; E - any occupation total permanent disability plus loss of independent existence after age X; with other possible coverages F and G possibly being available.

### Death or Earlier Critical Illness Benefit

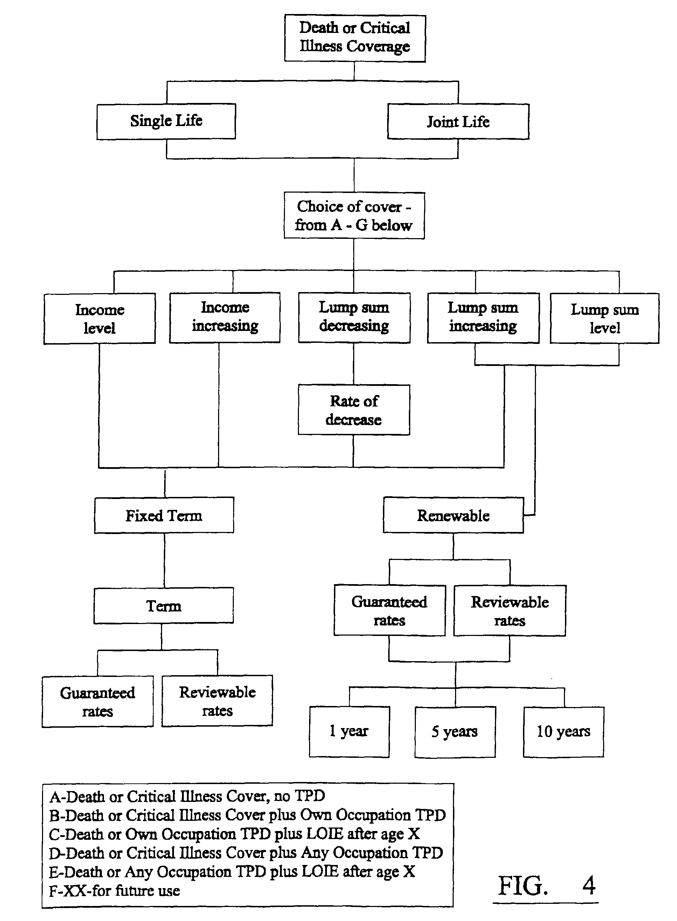

Figure 4 shows the coverage critique for this type of benefit and it will be understood how that coverage critique applies having read the coverage critiques regarding the earlier mentioned benefits.

### Disability Income

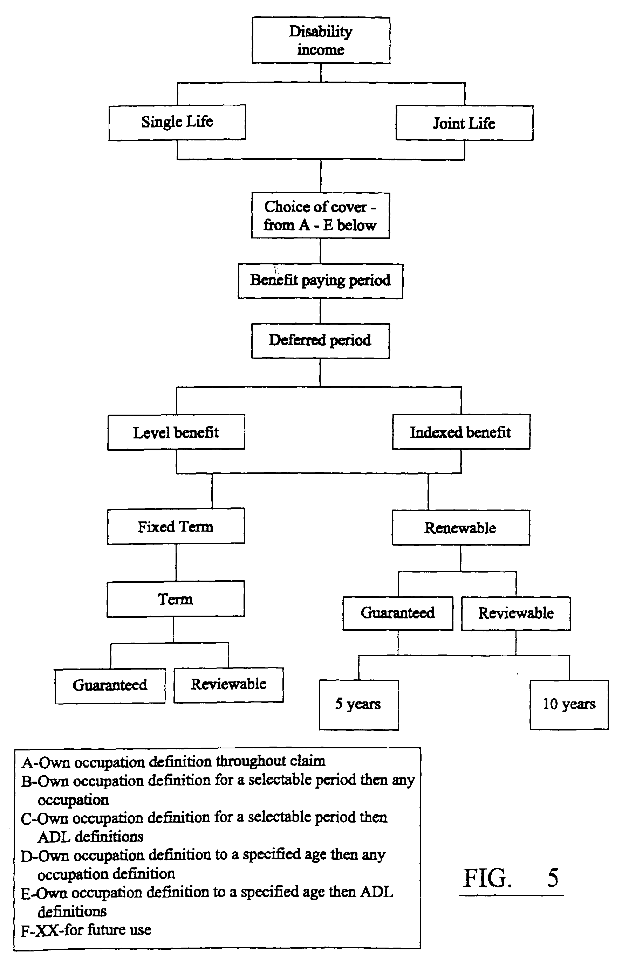

Coverage critique for disability income is shown in Figure 5.

For this type of benefit, there is a choice of cover given as: A - own occupation definition throughout claim; B - own occupation definition for a selectable period then any occupation; C - own occupation definition for a selectable period then activities of daily living (ADL) definitions; D - own occupation definition to a specified age then any occupation definition; E - own occupation definition to a specified age then ADL definitions.

The coverage may be selected for a predetermined benefit paying period, for instance, benefits being payable up to age 65, benefits being payable for three years, benefits being payable for five years, or benefits being payable for a selected number of years. Furthermore, a deferred period before the benefit pays out may be selected to be, for instance, among the following: four weeks; thirteen weeks; twenty six weeks; fifty two weeks.

The benefit may be a level benefit or an index benefit and, as with previously described benefits, may last for a fixed term or may be renewable etc.

### Waiver of Premium

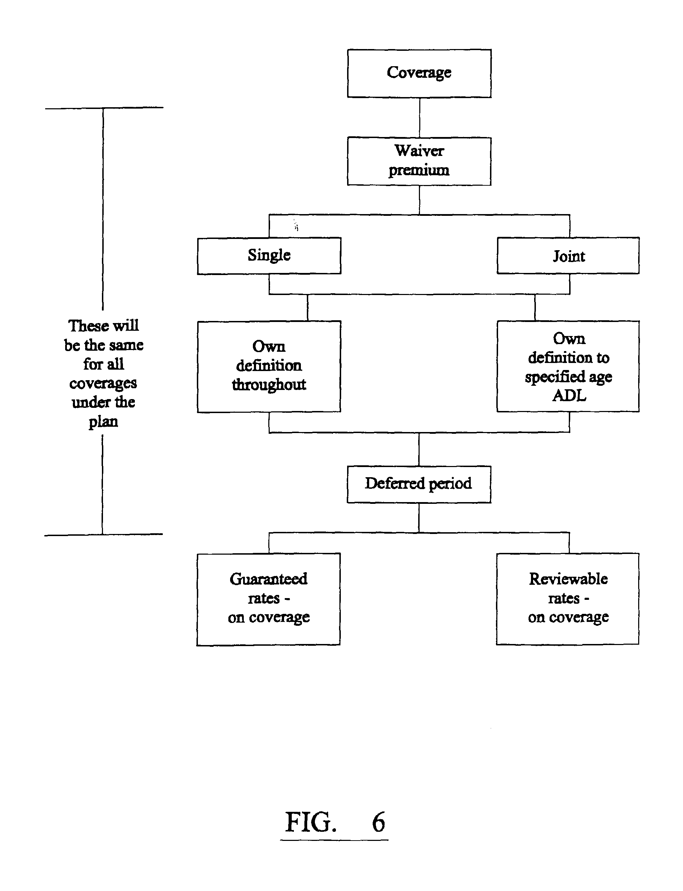

Figure 6 shows the coverage critique for waiver of premium.

This is a permanent health insurance coverage designed to waive all premiums in a particular plan if one of the lives assured cannot work due to sickness or disability.

Coverage may be available on a single life or joint life single event basis with a waiver being attached to each coverage. At the outset, waiver is only available on all coverages, i.e. at the outset the client cannot elect to have waiver of just some of the coverages.

Although waiver is attached to a particular coverage, the definition and waiting period will be the same across the whole plan.

### Unemployment Benefit

A coverage critique for unemployment benefit is shown in Figure 7. The wording of the coverage critique will be well understood referring to the previous coverage critiques and therefore, no further explanation will be given here. This benefit is designed to pay an income if the life assured becomes unemployed.

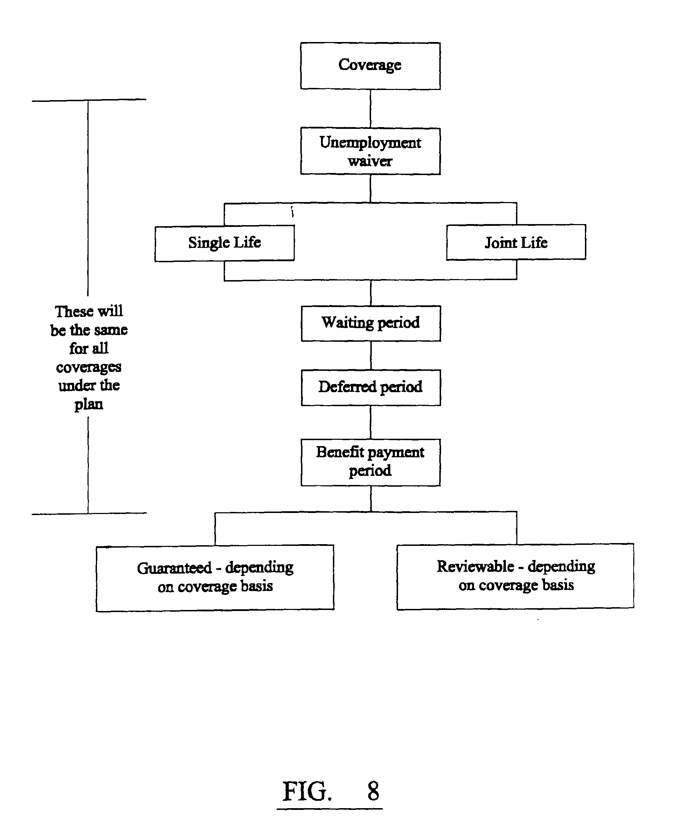

Figure 8 shows a coverage critique for unemployment waiver of a premium. As it is implied by this title, this is an unemployment benefit coverage designed to waive all premiums in a particular plan if one of the lives assured becomes unemployed.

### Long Term Care

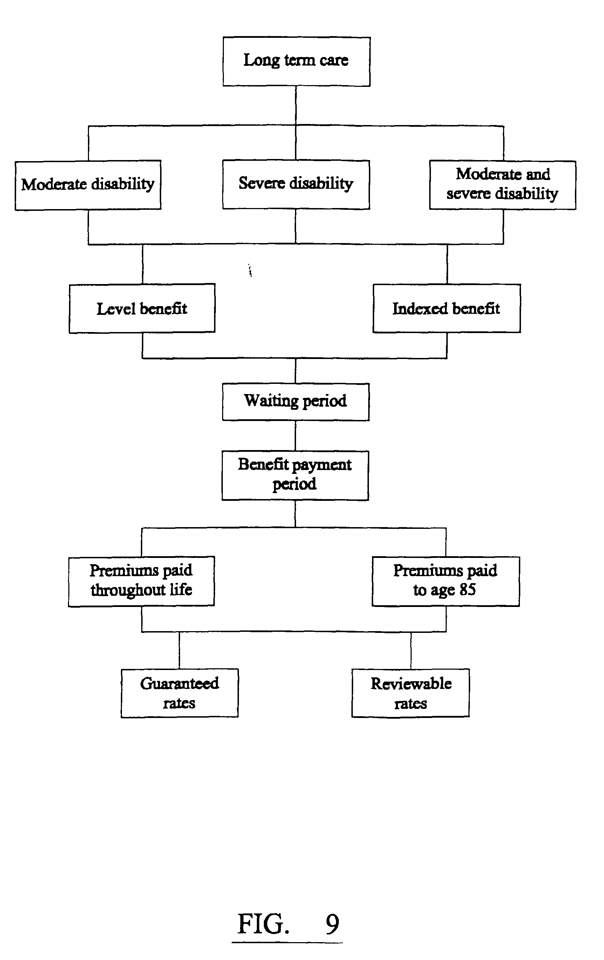

Figure 9 shows the coverage critique for long term care benefit for providing finance for the long term care requirements of the life assured either in his own home or in nursing or residential homes.

Cover is available on the basis of single life - multiple claims with three different versions being available: moderate disability benefit - payable if the life assured cannot perform two out of six activities of daily living; severe disability benefit - payable if the life assured cannot perform three out of six activities of daily living; or moderate and severe disability.

All policy holders will receive "assistive devices benefit" to contribute to the cost of assistive devices in the home and all benefits are underpinned by a mental impairment definition.

Waiting periods are selectable and may be as long as two years. Whereas all claims will be turned down during a waiting period on unemployment benefit, it is possible that some claims may be accepted during the waiting period for a long term care benefit. For example, claims may be accepted which arise from accidents during the first two years, whilst claims regarding mental impairment might not be accepted during the first three years.

A choice of deferred periods are available.

### Accidental Death Benefit

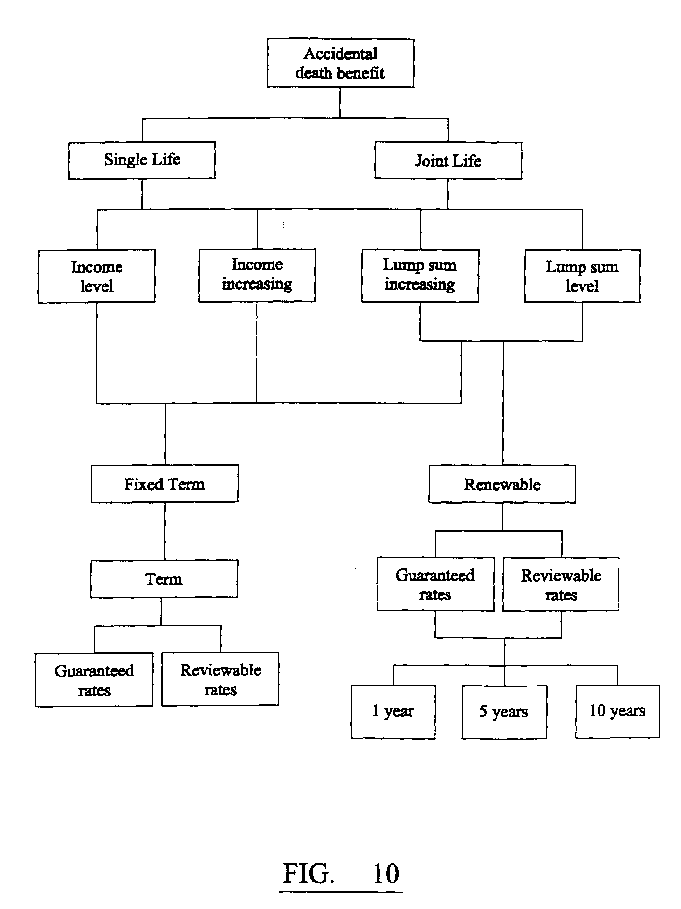

Figure 10 shows the coverage critique for accidental death benefit, that critique being very similar to the critical illness cover critique, it will not be explained in detail. Suffice to say, coverage is on the basis of a lump sum or income paid out on accidental death such as the death of a life resulting from injury inflicted by accidental, violent, external and physical means, independent of mental illness or pre-existing physical infirmity.

### Hospital Cash Benefit

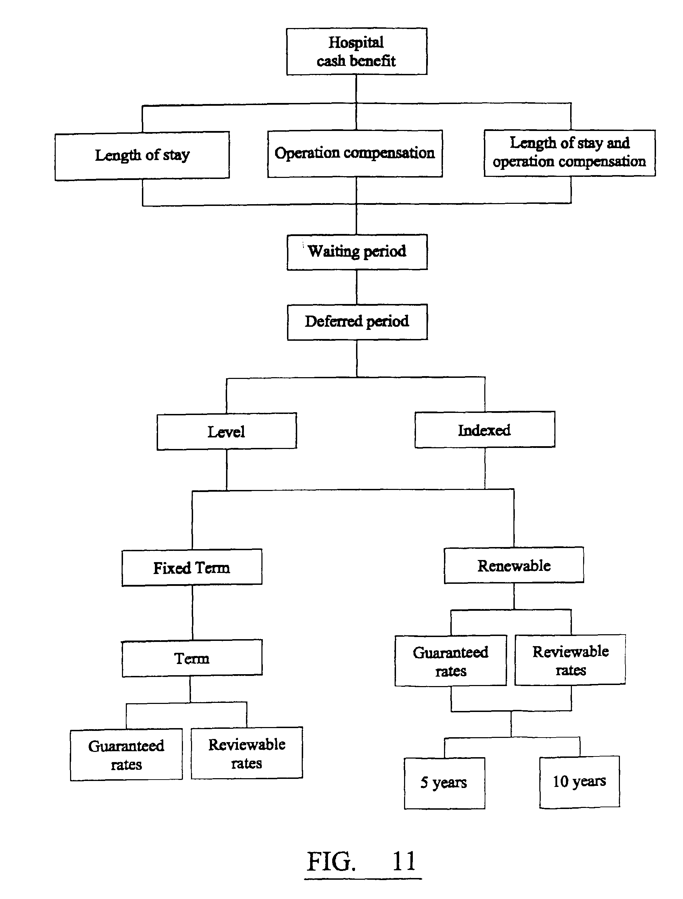

The coverage critique for this benefit is shown in Figure 11. This benefit pays a cash amount for each day spent in hospital by the life assured. In addition it will pay an extra cash sum if the life assured undergoes an operation. The cover will probably be provided by a third party with the premiums going to that party. Coverage is available in a number of different versions. "Length of stay" pays a cash amount for each day spent in hospital. "Operation Compensation" pays a fixed cash amount if the life assured undergoes an operation during the stay in hospital. "Length of stay and operation compensation" pays a cash amount for each day spent in hospital and an additional cash amount payable if the life assured undergoes an operation. The waiting period may be four weeks, one hundred and thirteen weeks, or selectable. Various deferred periods may apply.

### Operation Cash Benefit

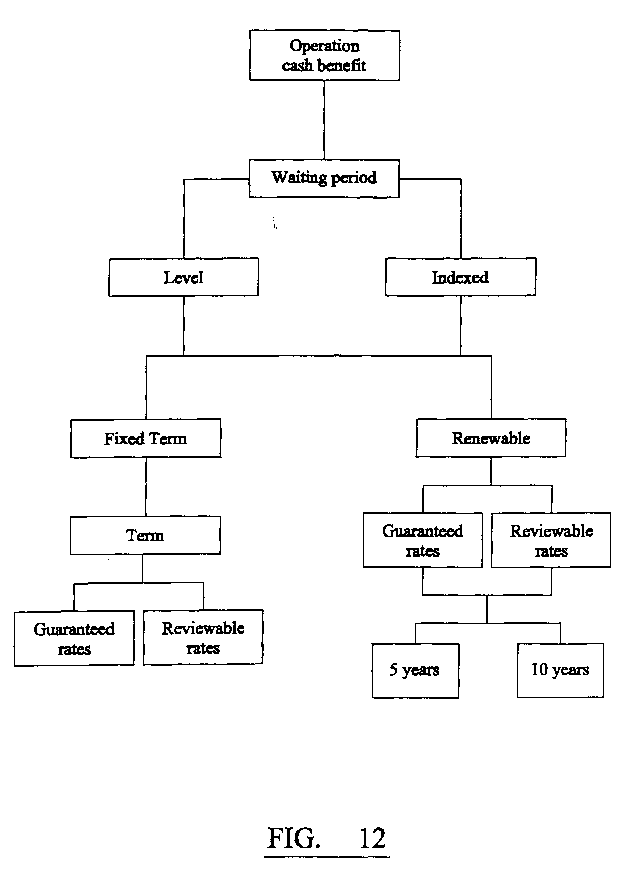

A coverage critique of this benefit is given in Figure 12. This benefit pays a cash lump sum if the life assured undergoes specified surgery.

### Personal Accident Benefit

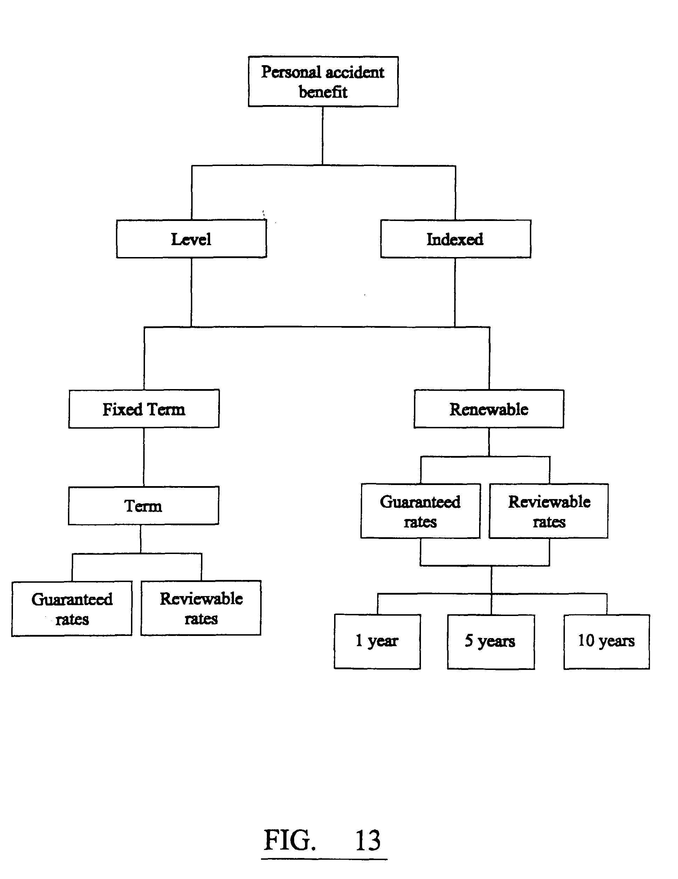

A coverage critique for this benefit is shown in Figure 13. Again, the terminology within that coverage critique will be readily understandable in the light of the previous critiques described.

Basically, this particular benefit is to cover accidental bodily injury or disability which is defined as the injury or disability of the life assured inflicted by accidental, violent, external and physical means, independent of mental illness or pre-existing physical infirmity.

### Medical Expenses Benefit

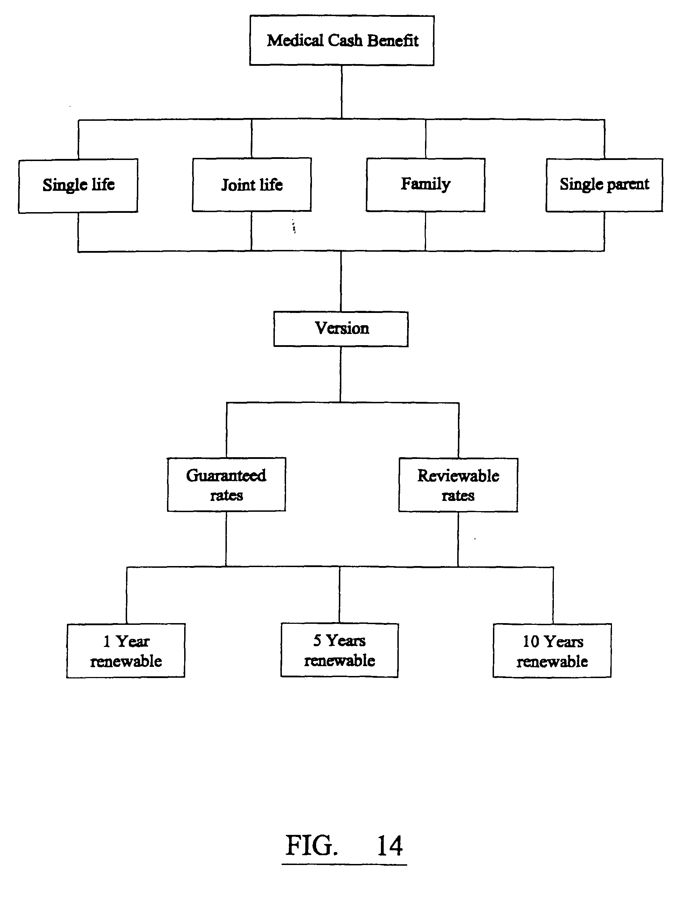

Figure 14 shows the coverage critique for this particular benefit which is a "budget" private medical insurance benefit. For indemnifying the policy holder for various types of private medical treatment taken either in approved private hospitals or in private wings of NHS hospitals. Many different versions will be available and actual benefits available within a policy will generally be defined at a marketing package level.

### Frequency of Coverages in a Policy/Product Rules

As has been mentioned with regard to the different benefits previously, clients may select more than one benefit of a particular type if desired. There are however some basic product rules which limit the number of times a coverage can appear.

Although waiver and unemployment waiver are shown as individual coverages in the listing below, in reality they attach to the other coverages in the plan.

The following list gives the limits (if any):

| | |
|---|---|
| Death | 1-many |
| Critical Illness Cover | 1-many |
| Death or Critical Illness cover | 1-many |
| Disability income | 1-many single life per life assured and 1-many joint life |
| Waiver | 1 occurrence |
| Unemployment Benefit | 1-many single life per life assured and 1-many joint life |
| Unemployment Waiver | One occurrence |
| Long Term Care | 1-many |
| Accidental Death Benefit | 1-many |
| Hospital Cash | 1-many |
| Operation Cash | 1-many |
| Personal Accidental | 1-many |
| Medical Expenses | 1-many |

As well as rules governing the frequency of coverages as above, it will be appreciated that each of the various benefits listed has its own detailed product rules. The product rules determine, amongst other things, how different benefits interact with one another, how and when a particular benefit should pay out, how and when premiums are collected etc. In practice, the product rules will be embodied in the underlying computer system implementing the invention and monitored by the system during data entry as discussed in relation to the navigation tree.

### Alterations to Existing Policy Plans

As has been mentioned earlier, the systems and methods of the present invention enable easy modification to policy plans at all levels.

Alterations may be made at contract level or coverage level.

For instance, the relatively simple, but major, alterations of CANCEL POLICY or REINSTATE POLICY can be made at contract level, and at individual benefit coverage level the simple, but major, alterations of: REMOVE INDEXATION, CANCEL COVERAGE, CANCEL COVERAGE FROM INCEPTION, RE-INSTATE COVERAGE or TERMINAL COVERAGE are available. These types of changes can be used to eliminate particular benefits from the plan for instance.

The system can also cope very easily with contract level alterations of a more complex nature.

Examples of such more complex alterations are the operations of ADD COVERAGE, which adds a specific extra benefit to a particular plan. Naturally, when such an operation is performed, the individual details specific to that benefit need to be entered, as in the earlier benefit detail screens.

At the coverage level, relatively complex changes may be made such as adding indexation, adding or changing a life assured, changing the term of a policy benefit, decreasing or increasing a sum assured, the removing of a life assured etc.

Following alterations, a new policy document would generally be printed out and sent to the client and billing maintenance would also need to be made.

As well as changes being initiated by clients, one of the major objectives of this product is that it achieve the status of PRODUCT FOR LIFE - CLIENT FOR LIFE. For this reason, existing clients having taken out a policy plan in accordance with the teachings of the present invention may be approached from time to time and given the opportunity to upgrade their policy plan by means of what is known as upselling.

### Upselling

Upselling is key to the product proposition - the 'client for life' concept makes the product unique.

The IFA gains a client for life by building an ongoing relationship with that client. SELF ASSURANCE gives the IFA the ability to meet the ongoing and changing needs of the client. It is cheaper to service the needs of an existing client than to find new clients. Proactive upselling will allow the IFA to proactively approach their clients to build and maintain this relationship.

Scottish Provident UK builds IFA loyalty through this concept. This loyalty brings in increased new business, and a constant stream of new business from the existing clients.

There are various potential ways in which upselling may operate:
a) We produce communications material and data and give them to the IFA who contacts the client. A response mechanism sends the client back to the IFA and any new business comes into Scottish Provident UK in the usual way.
b) We produce communications material and agree with IFA who we will contact. We produce communications and contact client. A response mechanism sends the client back to the IFA and any new business comes into Scottish Provident UK in the usual way.
c) Other methods of upselling are being considered.

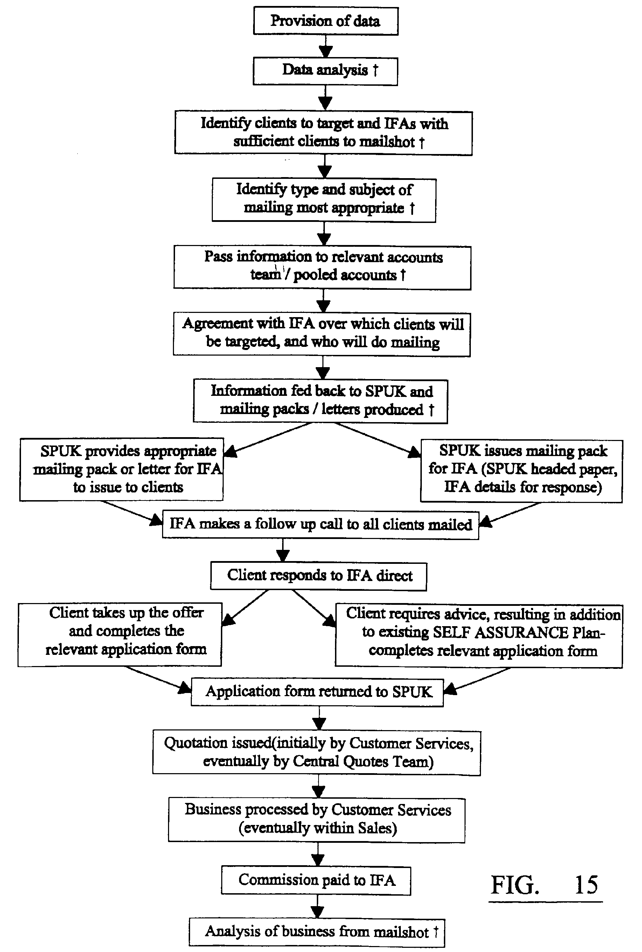

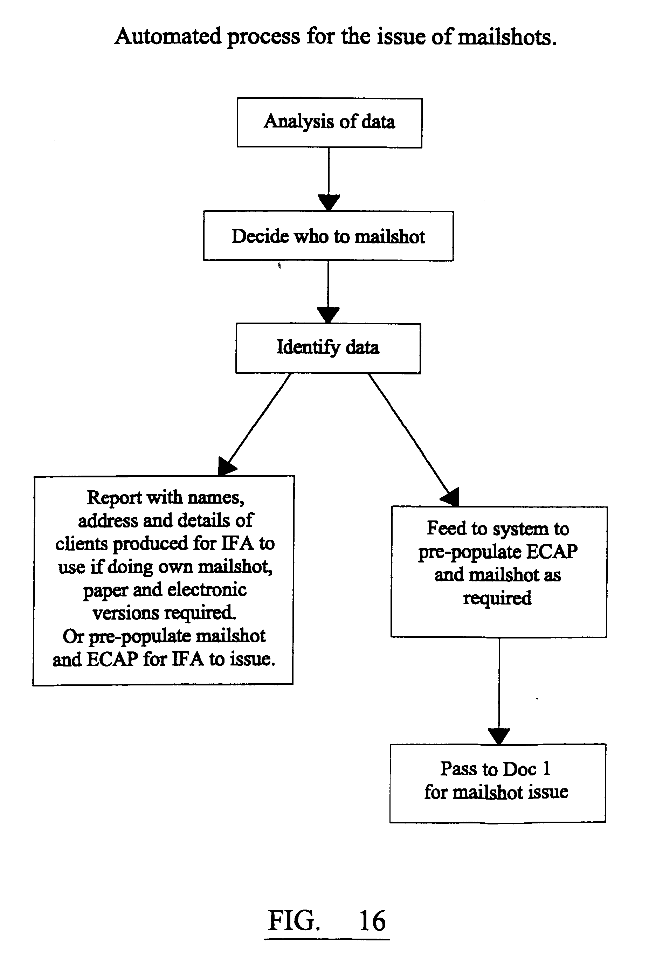

The flowchart of Figure 15 shows the process for **proactive** upselling and an automated process for the issue of mail shots is shown in Figure 16.

As will have been appreciated from the above description, the system, method and products of the present invention enable clients to take out an insurance product for life. Clients are able to have unique choice and flexibility in the initial policy inception stages, during the life of the policy when client needs change and when alterations need to be made etc. The ease of use of the system is such that within a single policy plan, all client needs are accommodated with only those parts actually required by a client being implemented and with the further benefit that only one set of policy documentation needs to be kept by the client, and one set of payments administered.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A method of insurance product provision for customers, the method comprising the steps of:
(i) from an assessment of a clients financial position as established in a fact finding exercise, identifying a clients insurance needs in terms of recommended required benefits of a single flexible policy plan;
(ii) presenting the identified benefits to the client and enabling the client to choose which benefits to adopt within the policy plan;
(iii) for at least some of the chosen benefits allowing the client to choose how each benefit should pay out;
(iv) calculating the policy plan cost on the basis of the benefits selected; and
(v) implementing the policy.

2. A method of insurance product provision for customers as claimed in claim 1, wherein, in step (iii), for particular benefits chosen, the client is able to choose how that benefit should pay out.

3. The method of claim 2, wherein how the benefit pays out is subject to limitations imposed by product rules relating to the particular benefits.

4. The method of claim 3, wherein the product rules dictate that a benefit may pay out as: (a) a level cash sum; (b) an increasing cash sum; (c) a level income; (d) an increasing income; (e) a decreasing cash sum.

5. A method of insurance product provision for customers as claimed in any preceding claim, wherein in step (ii), the client is able to choose more than one benefit of a same type.

6. The method of claim 5, wherein available benefit types may comprise the following:
(I) death benefit;
(II) critical illness benefit;
(III) death or critical illness benefit;
(IV) disability income benefit;
(V) unemployment benefit;
(VI) health cash benefit;
(VII) premium payment benefit.

7. A method of insurance product provision for customers as claimed in any preceding claim, wherein benefits having dissimilar durations are selectable.

8. A method of insurance product provision for customers as claimed in claim 1, wherein chosen benefits may be taken out with either reviewable or guaranteed rates.

9. A method of insurance product provision for customers as claimed in any preceding claim, wherein chosen benefits may be level or index linked.

10. A method of updating insurance provision for customers, the method comprising the steps of:
(i) assessing a change in client financial position with respect to a client's financial position assessed during an initial policy plan take up;
(ii) from the change in client position identified in step (i) identifying a client's new insurance needs in terms of recommended updated current benefits or new benefits of a single flexible policy plan;
(iii) presenting identified benefits to the client and enabling the client to choose which benefits to adopt within an updated policy plan;
(iv) for each new benefit or updated benefit allowing the client to choose how each benefit should pay out;
(v) calculating the policy plan cost on the basis of prior selected and continued unchanged benefits, updated benefits and new benefits selected; and
(vi) implementing the policy.

11. The method of claim 10, wherein how the benefit pays out is subject to limitations imposed by product rules relating to the particular benefits.

12. The method of claim 11, wherein the product rules dictate that a benefit may pay out as: (a) a level cash sum; (b) an increasing cash sum; (c) a level income; (d) an increasing income; (e) a decreasing cash sum.

13. A method according to claim 10, 11 or 12, wherein in step (iii), the client is able to choose more than one benefit of a same type.

14. The method of any of claims 10 to 13, wherein available benefit types presented in step (iii) may comprise the following:
(I) death benefit;
(II) critical illness benefit;
(III) death or critical illness benefit;
(IV) disability income benefit;
(V) unemployment benefit;
(VI) health cash benefit;
(VII) premium payment benefit.

15. A method according to any of claims 10 to 14, wherein benefits having dissimilar durations are selectable.
